# EUROPEAN PATENT SPECIFICATION

(11) **EP 4 178 235 B1**
(45) Date of publication and mention of the grant of the patent: **13.08.2025**
(21) Application number: 21854617.4
(22) Date of filing: 02.08.2021
(51) Int. Cl.: H04W 4/06, H04W 28/04, H04W 88/02, H04W 72/30

(54) **COMMUNICATION CONTROL METHOD**
KOMMUNIKATIONSSTEUERUNGSVERFAHREN
PROCÉDÉ DE COMMANDE DE COMMUNICATION

(30) Priority: 03.08.2020 JP 2020132044
(43) Date of publication of application: 10.05.2023
(60) Divisional application: 25184816.4
(73) Proprietor: Kyocera Corporation, Kyoto-shi Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2021/028638
(87) International publication number: WO 2022/030454

(56) References cited:
- EP-A1- 3 282 725
- WO-A1-2005/022812
- WO-A1-2019/129212
- WO-A1-2021/056154
- JP-A- 2011 254 507
- HYTERA COMMUNICATIONS CORP.: "Dynamic Configuration of MBSFN areas for MC service", 3GPP DRAFT; R2-1705086_DYNAMIC CONFIGURATION OF MBSFN AREAS FOR MC SERVICE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Hangzhou, China; 20170515 - 20170519, 14 May 2017 (2017-05-14), Mobile Competence Centre ; 650, route des Lucioles ; F-06921 Sophia-Antipolis Cedex ; France , XP051275564
- HUAWEI: "RLC SN reset and UM Window for MBMS", 3GPP DRAFT; R2-095510 RLC SN RESET AND UM WINDOW FOR MBMS SFN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Miyazaki; 20091012 - 20091016, 6 October 2009 (2009-10-06), Mobile Competence Centre ; 650, route des Lucioles ; F-06921 Sophia-Antipolis Cedex ; France , XP050604726

## Description

### TECHNICAL FIELD

The present disclosure relates to a communication control method used in a mobile communication system.

### BACKGROUND OF INVENTION

In recent years, a mobile communication system of the fifth generation (5G) has attracted attention. New Radio (NR), which is a Radio Access Technology (RAT) of the 5G System, has features such as high speed, large capacity, high reliability, and low latency compared to Long Term Evolution (LTE), which is a fourth generation radio access technology.

WO 2019/129212 A1 discloses a communication method and a related product. The method achieved at one side of an access network comprises: an access network device transmits indication information to a user equipment, the indication information being used for indicating a receive mode of multicast service data, the receive mode comprising a unicast mode and/or a multicast mode; and the access network device transmits the multicast service data by using the unicast mode and/or the multicast mode indicated in the indication information. Transmission of multicast service data does not require that the user equipment receiving the multicast service data uses the multicast mode to receive the multicast service data, which facilitates removing the user equipment that influences the transmission efficiency, so as to improve the transmission efficiency of the multicast service.

### CITATION LIST

### NON-PATENT LITERATURE

NPL 1: 3GPP Technical Specification "3GPP TS 38.300 V16.2.0 (2020-07)"

### SUMMARY

The present invention provides a communication control method according to claim 1, an apparatus controlling a user equipment according to claim 5, a user equipment according to claim 6, a computer program according to claim 7, and a mobile communication system according to claim 8. Further embodiments of the present invention are disclosed in the dependent claims.

### BRIEF DESCRIPTION OF THE DRAWINGS

FIG. 1 is a diagram illustrating a configuration of a mobile communication system according to an embodiment.
FIG. 2 is a diagram illustrating a configuration of a User Equipment (UE) according to the embodiments.
FIG. 3 is a diagram illustrating a configuration of a base station (gNB) according to the embodiments.
FIG. 4 is a diagram illustrating a configuration of a protocol stack of a radio interface of a user plane handling data.
FIG. 5 is a diagram illustrating a configuration of a protocol stack of a radio interface of a control plane handling signalling (control signal).
FIG. 6 is a diagram illustrating a correspondence relationship between a downlink Logical channel and a downlink Transport channel according to an embodiment.
FIG. 7 is a diagram illustrating an example of operations according to a first embodiment.
FIG. 8 is a diagram illustrating a specific example of the operations according to the first embodiment.
FIG. 9 is a diagram illustrating RLC operations according to the first embodiment.
FIG. 10 is a diagram illustrating an RLC operation in an AM according to the first embodiment.
FIG. 11 is a diagram illustrating an RLC operation in a UM according to the first embodiment.
FIG. 12 is a diagram for illustrating a PDCP operation mode according to a second embodiment.
FIG. 13 is a diagram for illustrating the PDCP operation mode according to the second embodiment.
FIG. 14 is a diagram illustrating an example of the PDCP operation according to the second embodiment.
FIG. 15 is a diagram illustrating a handover operation according to the second embodiment.
FIG. 16 is a diagram illustrating another example of the handover operation according to the second embodiment.

### DESCRIPTION OF EMBODIMENTS

Introduction of multicast broadcast services to the 5G system (NR) has been under study. NR multicast broadcast services are desired to provide enhanced services compared to LTE multicast broadcast services.

The present disclosure provides enhanced multicast broadcast services.

A mobile communication system according to an embodiment will be described with reference to the drawings. In the description of the drawings, the same or similar parts are denoted by the same or similar reference signs.

### Configuration of Mobile Communication System

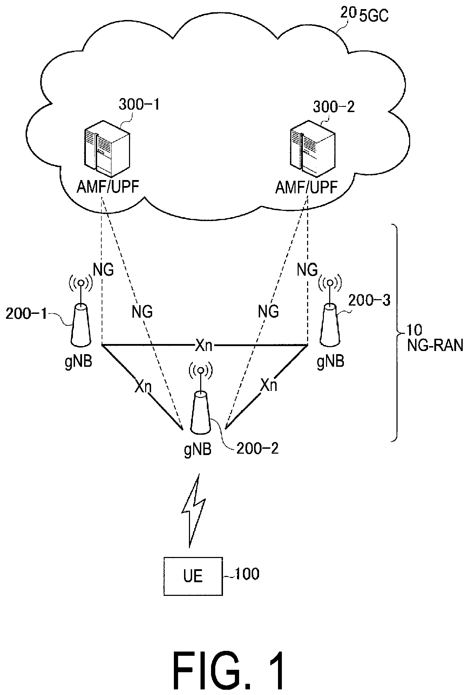

First, a configuration of a mobile communication system according to an embodiment will be described. FIG. 1 is a diagram illustrating a configuration of the mobile communication system according to an embodiment. This mobile communication system complies with the 5th Generation System (5GS) of the 3GPP standard. The description below takes the 5GS as an example, but Long Term Evolution (LTE) system may be at least partially applied to the mobile communication system.

As illustrated in FIG. 1, the mobile communication system includes a user equipment (UE) 100, a 5G radio access network (next generation radio access network (NG-RAN)) 10, and a 5G core network (5GC) 20.

The UE 100 is a mobile wireless communication apparatus. The UE 100 may be any apparatus as long as utilized by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), or a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or a plurality of cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of wireless communication area. The "cell" is also used as a term representing a function or a resource for performing wireless communication with the UE 100. One cell belongs to one carrier frequency.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signalling. The UPF controls data transfer. The AMF and UPF are connected to the gNB 200 via an NG interface which is an interface between a base station and the core network.

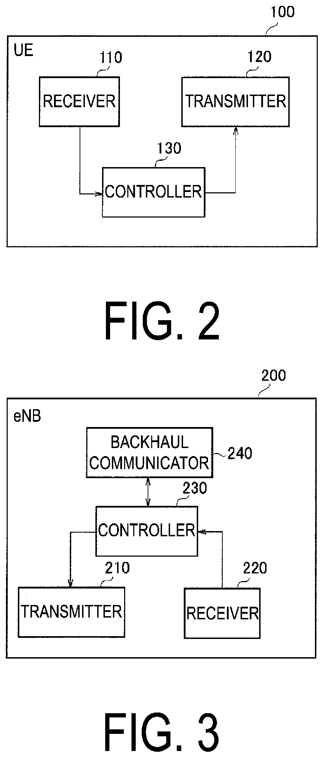

FIG. 2 is a diagram illustrating a configuration of the UE 100 (user equipment) according to an embodiment.

As illustrated in FIG. 2, the UE 100 includes a receiver 110, a transmitter 120, and a controller 130.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal output by the controller 130 (a transmission signal) into a radio signal and transmits the resulting signal through the antenna.

The controller 130 performs various types of control in the UE 100. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

FIG. 3 is a diagram illustrating a configuration of the gNB 200 (base station) according to an embodiment.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal output by the controller 230 (a transmission signal) into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

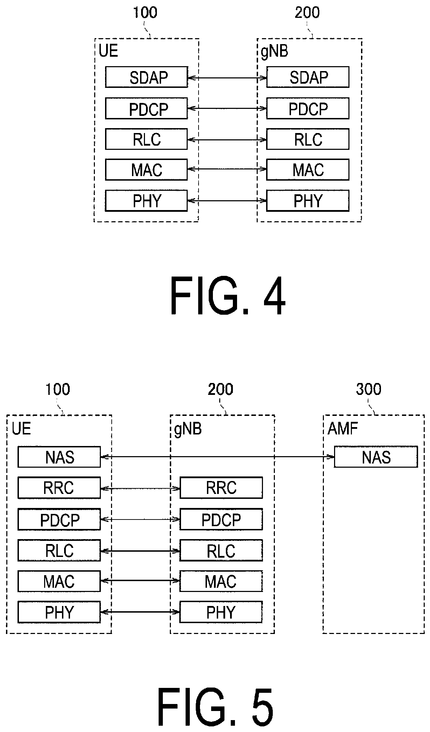

FIG. 4 is a diagram illustrating a configuration of a protocol stack of a radio interface of a user plane handling data.

As illustrated in FIG. 4, a radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs preferential control of data, retransmission processing using a hybrid ARQ (HARQ), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, modulation and coding schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression and decompression, and encryption and decryption.

The SDAP layer performs mapping between an IP flow as the unit of QoS control by a core network and a radio bearer as the unit of QoS control by an access stratum (AS). Note that, when the RAN is connected to the EPC, the SDAP may not be provided.

FIG. 5 is a diagram illustrating a configuration of a protocol stack of a radio interface of a control plane handling signalling (control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

RRC signalling for various configurations is transmitted between the RRC layer of the UE 100 and the RRC layer of the gNB 200. The RRC layer controls a logical channel, a transport channel, and a physical channel according to establishment, reestablishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When the connection between the RRC of the UE 100 and the RRC of the gNB 200 is suspended, the UE 100 is in an RRC inactive state.

The NAS layer which is higher than the RRC layer performs session management, mobility management, and the like. NAS signalling is transmitted between the NAS layer of the UE 100 and the NAS layer of the AMF 300.

Note that the UE 100 includes an application layer other than the protocol of the radio interface.

### MBS

An MBS according to an embodiment will be described. The MBS is a service in which the NG-RAN 10 provides broadcast or multicast, that is, point-to-multipoint (PTM) data transmission to the UE 100. The MBS may be referred to as the Multimedia Broadcast and Multicast Service (MBMS). Note that use cases (service types) of the MBS include public communication, mission critical communication, V2X (Vehicle to Everything) communication, IPv4 or IPv6 multicast delivery, IPTV, group communication, and software delivery.

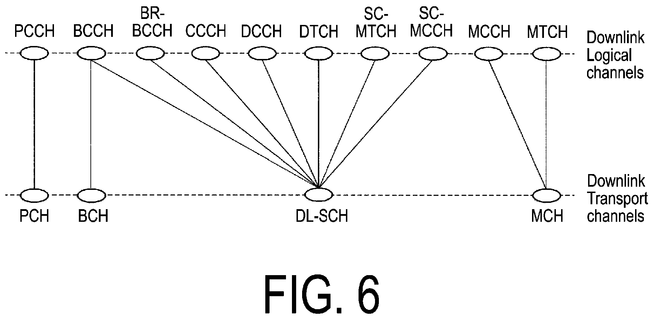

MBS Transmission in LTE includes two schemes, i.e., a Multicast Broadcast Single Frequency Network (MBSFN) transmission and Single Cell Point-To-Multipoint (SC-PTM) transmission. FIG. 6 is a diagram illustrating a correspondence relationship between a downlink Logical channel and a downlink Transport channel according to an embodiment.

As illustrated in FIG. 6, the logical channels used for MBSFN transmission are a Multicast Traffic Channel (MTCH) and a Multicast Control Channel (MCCH), and the transport channel used for MBSFN transmission is a Multicast Control Channel (MCH). The MBSFN transmission is designed primarily for multi-cell transmission, and in an MBSFN area including a plurality of cells, each cell synchronously transmits the same signal (the same data) in the same MBSFN subframe.

The logical channels used for SC-PTM transmission are a Single Cell Multicast Traffic Channel (SC-MTCH) and a Single Cell Multicast Control Channel (SC-MCCH), and the transport channel used for SC-PTM transmission is a Downlink Shared Channel (DL-SCH). The SC-PTM transmission is primarily designed for single-cell transmission, and corresponds to broadcast or multicast data transmission on a cell-by-cell basis. The physical channels used for SC-PTM transmission are a Physical Downlink Control Channel (PDCCH) and a Physical Downlink Control Channel (PDSCH), and enables dynamic resource allocation.

Although an example will be mainly described below in which the MBS is provided using the SC-PTM transmission scheme, the MBS may be provided using the MBSFN transmission scheme. An example will be mainly described in which the MBS is provided using multicast. Accordingly, the MBS may be interpreted as multicast. Note that, the MBS may be provided using broadcast.

In the following, MBS data refers to data transmitted by the MBS. An MBS control channel refers to the MCCH or SC-MCCH, and an MBS traffic channel refers to the MTCH or SC-MTCH.

The network can provide different MBS services for respective MBS sessions. The MBS service is identified by Temporary Mobile Group Identity (TMGI) and/or a session identifier, and at least one of the identifiers is referred to as an MBS service identifier. Such an MBS service identifier may be referred to as an MBS session identifier or a multicast group identifier.

### First Embodiment

Next, given the mobile communication system and MBS described above, a first embodiment will be described. The first embodiment is an embodiment related to RLC operations for the MBS.

### (1) RLC Configuration Operation for MBS

The RLC layer has three operation modes: an AM (Acknowledged Mode), a UM (Unacknowledged Mode), and a TM (Transparent Mode). Of these modes, only the AM supports a retransmission function based on automatic retransmission control (Automatic Repeat reQuest (ARQ)). The AM is a mode in which retransmission control is performed by a receiving RLC entity providing ACK feedback to a transmitting RLC entity.

In the LTE multicast service, the operation mode of the RLC entity is configured to be the UM. However, implementation of a mechanism for enabling the AM to be applied to the NR multicast service is considered to improve reliability and flexibility of multicast communication.

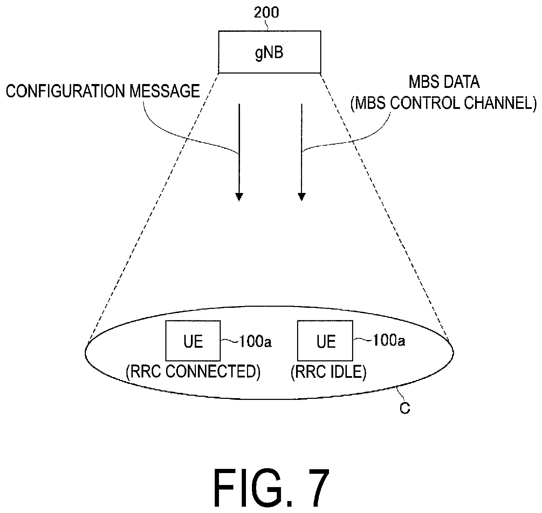

FIG. 7 is a diagram illustrating an example of operations according to the first embodiment.

As illustrated in FIG. 7, UE 100a in the RRC connected state and UE 100b in the RRC idle state are present in a cell C managed by the gNB 200. The UE 100a and the UE 100b are assumed to take interest in receiving MBS data belonging to the same MBS service (the same MBS session).

The gNB 200 transmits a message (hereinafter referred to as "configuration message") for performing configuration related to the RLC entity of the UE 100. The configuration message contains an information element (hereinafter referred to as "RLC configuration information") that designates the operation mode of the RLC entity for an MBS traffic channel on which MBS data is transmitted.

The RLC configuration information designates, as an operation mode of the RLC entity, one of a first mode (i.e., the AM) in which the automatic retransmission control is performed and a second mode in which the automatic retransmission control is not performed. The second mode is the UM or the TM, and the description below focuses on an example in which the second mode is the UM.

For example, the gNB 200 transmits a configuration message in broadcast. Each of the UE 100a in the RRC connected state and the UE 100b in the RRC idle state receives the configuration message. Transmitting the configuration message in broadcast enables the UE 100b in the RRC idle state to also receive the configuration message.

For example, the configuration message may be MBS system information transmitted via a Broadcast Control Channel (BCCH). The configuration message may be MBS control information transmitted via the MBS control channel.

The configuration message may be UE-dedicated signaling. For example, the configuration message may be an RRC Reconfiguration message that is a type of RRC message. Such UE-dedicated signaling and broadcast signaling may be used in combination.

In this case, the configuration contents broadcast in the MBS system information or the MBS control channel may be different from the configuration contents in the dedicated signaling. However, the UE 100 that receives dedicated signaling (specifically, the UE 100a in the RRC connected state) preferentially applies the dedicated signaling over broadcast signaling. This enables configuration in which a certain UE(s) 100 is allowed to provide feedback (AM), whereas other UEs 100 are not allowed to provide feedback (UM).

The configuration message may include an identifier associated with the RLC configuration information. The identifier is used to identify the MBS traffic channel, and is, for example, an MBS service identifier and/or a group Radio Network Temporary Identifier (RNTI). This allows the operation mode of the RLC entity to be designated for each MBS traffic channel. An example will be mainly described below in which the MBS service identifier (e.g., the TMGI) is used as the identifier as described above.

The configuration message may include a plurality of sets of RLC configuration information and an MBS service identifier. For example, in the configuration message, MBS service identifier #1 may be associated with RLC configuration information designating the AM, and MBS service identifier #2 may be associated with RLC configuration information designating the UM.

In the first embodiment, when the UE 100 is in the RRC connected state, the UE 100 may configure the operation mode of the RLC entity according to the RLC configuration information included in the configuration message. When in the RRC idle state or the RRC inactive state, the UE 100 may configure the operation mode to be the second mode (UM) regardless of the RLC configuration information included in the configuration message. The UE 100 in the RRC idle state or the RRC inactive state fails to transmit feedback (STATUS PDU) for ACK/NACK to the gNB 200, and cause the operation to be in the second mode (UM).

However, in the gNB 200, the RLC entity associated with the MBS traffic channel operates in the AM. Thus, the UE 100b with the RLC entity of the UM needs to be able to process packets of the AM (AMD PDU) from the gNB 200. Thus, the gNB 200 may limit a sequence number length used in the AM to a configuration adapted to a sequence number length present in the UM. For example, the sequence number length used in the AM is set to 12 bits corresponding to the maximum sequence number length present in UM. Alternatively, the sequence number length of packets of the UM (UMD PDU) may be extended to 18 bits.

After the operation mode of the RLC entity of each UE 100 is configured in accordance with the configuration message, the gNB 200 transmits the MBS data via the MBS traffic channel. Each UE 100 receives the MBS data.

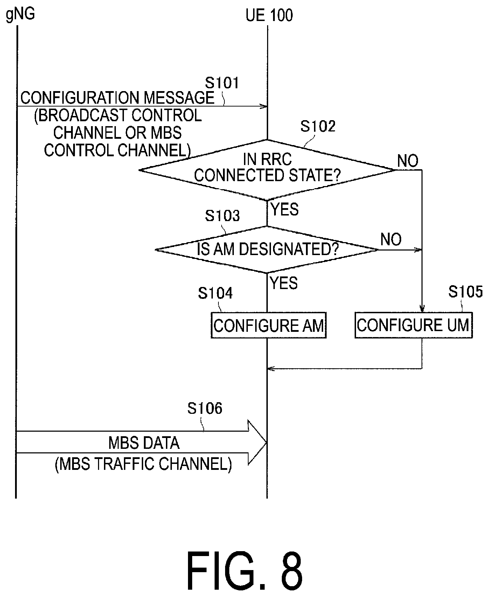

FIG. 8 is a diagram illustrating a specific example of the operations according to the first embodiment.

As illustrated in FIG. 8, in step S101, the gNB 200 transmits the configuration message. Here, the configuration message is assumed to be transmitted on a broadcast control channel or the MBS control channel. The UE 100 receives the configuration message.

When the UE 100 having received the configuration message is in the RRC connected state (step S102: YES), and the AM is designated in the configuration message (step S103: YES), in step S104, the UE 100 configures the RLC entity to be in the AM (AM RLC entity) for the MBS traffic channel.

On the other hand, when the UE 100 having received the configuration message is not in the RRC connected state (step S 102: NO), or the UM is designated in the configuration message (step S103: NO), in step S106, the UE 100 configures the RLC entity to be in the UM (UM RLC entity) for the MBS traffic channel.

In step S106, the gNB 200 transmits the MBS data via the MBS traffic channel. The UE 100 receives the MBS data. Here, the RLC entity of the UE 100 processes packets corresponding to the MBS data (AMD PDU).

Note that in the example described above, the second mode in which the automatic retransmission control is not performed is the UM but that the second mode may be a newly defined RLC operation mode. In such RLC operation mode, the AMD PDU can be received, but no feedback-related operations (e.g., polling for ARQ and Status Reporting) are performed. When the AM is designated by broadcast signaling, the RLC entity of UE 100 in the RRC idle state or the RRC inactive state may operate in such a new RLC operation mode.

### (2) RLC Operations for MBS

RLC operations for the MBS according to the first embodiment will be described. The receiving RLC entity performs reception processing by using a sliding window that moves in response to reception of RLC packets. Such a sliding window is controlled by variables of the RLC entity.

The variables used for such sliding window control are initialized when RLC entity is established or reestablished. A sequence number corresponding to an initial value is basically "0," which is used as a reference to determine the initial position of the sliding window. In unicast communication, the UE 100 can first receive an RLC packet with sequence number "0" from the gNB 200, and thus the variables can be handled as described above without any problem.

However, for the MBS, the UE 100 can join the MBS session in the middle of the session, and the sequence number the UE 100 receives first is variable. Thus, the first received packet may be a packet which is not within the sliding window. In this case, RLC reception processing cannot be performed until a packet within the sliding window is subsequently received. Thus, a burst error may occur at the beginning of the MBS reception.

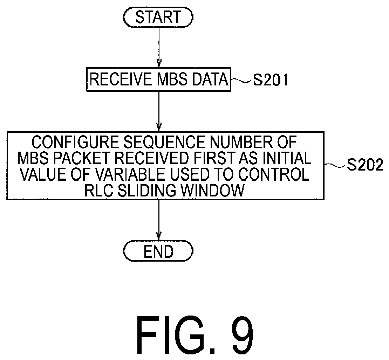

Thus, the RLC entity of the UE 100 changes the variables as described above according to the sequence number of the RLC packet received first. FIG. 9 is a diagram illustrating the RLC operations according to the first embodiment.

As illustrated in FIG. 9, in step S201, the RLC entity of the UE 100 receives MBS data (RLC packet) from the gNB 200.

In step S202, the RLC entity of the UE 100 configures the initial value of a variable used for a predetermined RLC operation (e.g., sliding window control) to be the sequence number of the MBS data (RLC packet) received first from the gNB 200.

This ensures that the sequence number of the first received packet is within the sliding window, allowing the RLC reception processing to be successfully performed. Thus, the possibility of a burst error at the beginning of the MBS reception can be reduced.

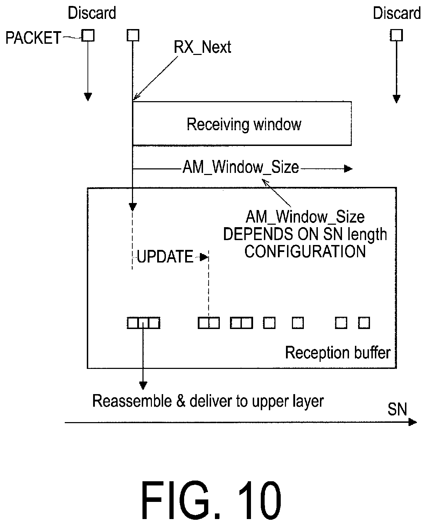

FIG. 10 is a diagram illustrating the RLC operation in the AM according to the first embodiment. As illustrated in FIG. 10, the AM RLC entity of the UE 100 manages a receiving window that is a type of sliding window. The AM RLC entity of the UE 100 temporarily stores and reassembles, in a reception buffer, packets received within the receiving window, and delivers the resultant packets to the upper layer. The AM RLC entity of the UE 100 discards packets with sequence numbers (SN) which are not within the reception window. The size of the reception window is determined according to the sequence number length (SN length). A variable defining the starting point of such a receiving window is referred to as "RX_Next." The AM RLC entity of the UE 100 configures the initial value of the variable "RX_Next" to be the sequence number of the MBS data (RLC packet) received first from the gNB 200.

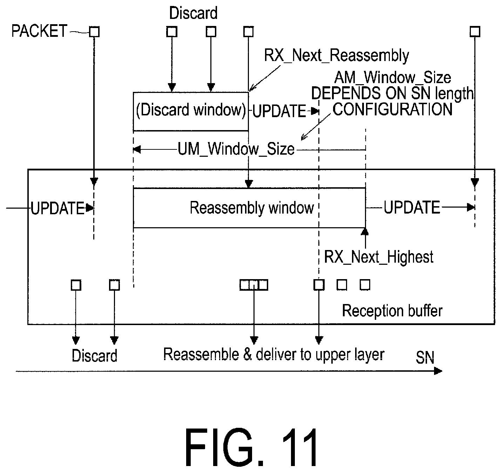

FIG. 11 is a diagram illustrating the RLC operation in the UM according to the first embodiment. As illustrated in FIG. 11, the UM RLC entity of the UE 100 manages a Reassembly window, which is a type of sliding window, and a window used to discard packets (referred to here as a Discard window). The UM RLC entity of the UE 100 reassembles, in the Reception buffer, packets with sequence numbers, which are within the Reassembly window and not within the Discard window, and delivers the resultant packets to the upper layer. Packets with the other sequence numbers are discarded. A variable that defines the end point of the Reassembly window is referred to as "RX_Next_Highest." The UM RLC entity of the UE 100 configures the initial value of the variable "RX_Next_Highest to be the sequence number of the MBS data (RLC packet) received first from the gNB 200."

### Second Embodiment

Next, a second embodiment will be described, mainly regarding differences from the first embodiment. The second embodiment relates to PDCP operations for the MBS.

### (1) PDCP Operations for MBS

The LTE multicast broadcast service does not use the PDCP entity. However, the NR MBS is assumed to support handover, and the PDCP entity can desirably compensate for packet loss during handover. The PDCP entity is required when the MBS is subjected to PDCP duplication in which the PDCP entity dually transmits the same PDCP packet through two paths.

Here, in multicast, for example, when the UE 100 having joined the communication in the middle of the MBS session performs the subsequent PDCP reception operation, the packets may fail to be successfully processed.

### - Header Decompression

The header compression of PDCP (IP header compression or the like) is achieved by saving a header (IP header or the like) of a packet first received by a receiving PDCP entity, removing a header from a second packet and transmitting the resultant second packet by a transmitting PDCP entity, and coupling the header saved by the receiving PDCP entity to the second packet and delivering the resultant second packet to the upper entity. Accordingly, the UE 100 having joined the MBS session in the middle of the session has not received the first packet, and thus fails to decompress the header (i.e., to reproduce the packets).

### - Deciphering (De-ciphering)

Once the PDCP packet is enciphered, deciphering fails to be performed when no information is available such as a key or a sequence number derived from a UE identifier or the like. For example, the UE 100 having joined to the MBS session in the middle of the session includes no information required for deciphering, and thus fails in deciphering.

On the other hand, when a plurality of bearers (i.e., a plurality of data paths) are terminated with one PDCP entity as in the case of PDCP duplication, the following PDCP reception operation may be required.

### - Duplicated Packet Discarding (Duplicate discarding)

When duplicated PDCP packets (i.e., a plurality of PDCP packets having the same sequence number) are received via a plurality of bearers, packet discarding needs to be performed to avoid duplication. Specifically, the receiving PDCP entity delivers, to the upper layer, one of the plurality of PDCP packets having the same sequence number, and discards the remaining ones.

### - Packet Reordering

When the receiving PDCP entity does not receive the PDCP packets in order of the sequence number, the receiving PDCP entity needs to reorder the PDCP packets in order of the sequence number and then deliver the PDCP packets to the upper layer. However, for the UM bearer, the packet reordering need not be performed.

Thus, in the second embodiment, the receiving PDCP entity receiving the PDCP packets via the plurality of bearers including a bearer for the MBS service performs the PDCP reception operation for MBS reception. Specifically, in the PDCP reception operation for MBS reception, the receiving PDCP entity performs the duplicated packet discarding and/or the packet reordering without performing the enciphering and/or the header decompression. The receiving PDCP entity may also remove the PDCP header.

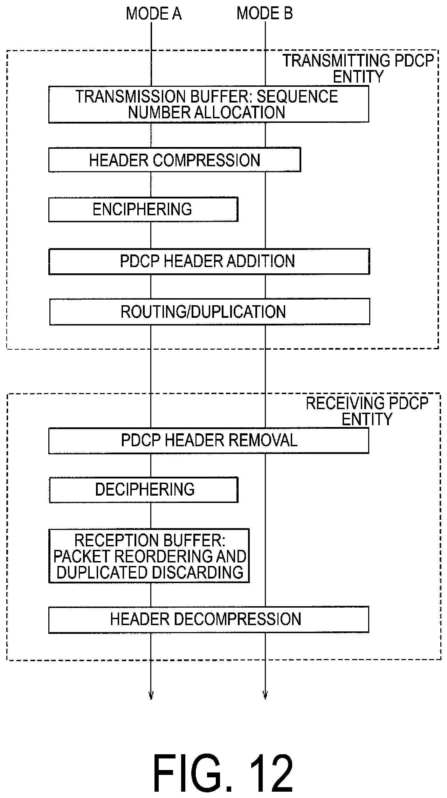

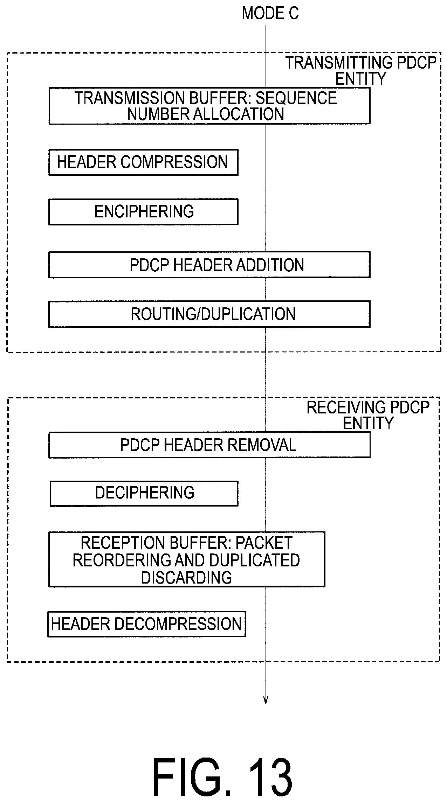

FIGS. 12 and 13 are diagrams for illustrating a PDCP operation mode according to the second embodiment. In the second embodiment, the PDCP entity operates in one of the three operation modes.

As illustrated in FIG. 12, mode A is applied to a bearer for user data other than the MBS data (e.g., unicast data). In mode A, the transmitting PDCP entity performs, on packets from the upper layer, sequence number allocation, header compression, enciphering, PDCP header addition, and routing/duplication. The receiving PDCP entity performs, on packets from the transmitting PDCP entity, PDCP header removal, deciphering, and packet reordering, duplicated packet discarding, and header decompression.

Mode B is applied to a bearer for control data such as the RRC message. In mode B, the transmitting PDCP entity performs, on packets from the upper layer, sequence number allocation, header compression, PDCP header addition, and routing/duplication. The receiving PDCP entity performs PDCP header removal and header decompression on packets from the transmitting PDCP entity.

As illustrated in FIG. 13, mode C is applied to a bearer (MBS bearer) for the MBS data. In mode C, the transmitting PDCP entity performs, on packets from the upper layer, sequence number allocation, PDCP header addition, and routing/duplication. The receiving PDCP entity performs, on packets from the transmitting PDCP entity, PDCP header removal, packet reordering, and duplicated discarding.

For the MBS, the gNB 200 performs configuration for the UE 100 to allow the PDCP entity of the UE 100 to operate in mode C. For example, the gNB 200 transmits, to the UE 100, an RRC message for configuring a bearer (e.g., an RRC Reconfiguration message).

Here, the gNB 200 includes, in the configuration information, an information element indicating that the bearer is for the MBS (MBS bearer). For example, each bearer configuration in the RRC message includes an additional information element such as "multicast-bearer ENUM(true) optional."

When receiving such an RRC message from the gNB 200, the UE 100 generates a PDCP entity for the MBS operating in mode C. The PDCP entity for the MBS performs MBS reception processing on MBS data belonging to the MBS bearer.

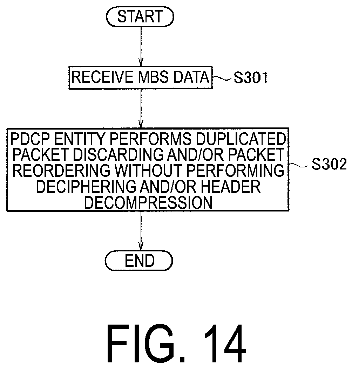

FIG. 14 is a diagram illustrating an example of the PDCP operation according to the second embodiment.

As illustrated in FIG. 14, in step S301, the PDCP entity of the UE 100 receives MBS data (PDCP packet) from the gNB 200. Here, the PDCP entity of the gNB 200 is assumed not to perform header compression and enciphering on the PDCP packets belonging to the MBS service (MBS session).

In step S302, after performing the PDCP header removal on the received PDCP packet, the PDCP entity of the UE 100 performs the duplicated packet discarding and/or the packet reordering by using the reception buffer. However, the PDCP entity of the UE 100 does not perform the header decompression and deciphering on the received PDCP packet.

### (2) PDCP Operations in Handover during MBS Reception

The PDCP operation performed at the time of handover during MBS reception according to the second embodiment will be described below. The UE 100 may perform handover during MBS reception. The handover refers to a cell switching operation of the UE 100 in the RRC connected state. The description below mainly assumes that each cell (in other words, a source cell and a target cell) provides the same MBS service (same MBS session) before and after the handover.

When the UE 100 performs handover during MBS reception, MBS data packet loss may occur due to operation of connecting to the target cell or the like. The PDCP layer includes a retransmission function for PDCP packets based on feedback (status report) from the UE 100 to the gNB 200. The second embodiment allows the target cell to compensate for packet loss occurring at the time of handover during MBS reception, by using the retransmission function of the PDCP layer.

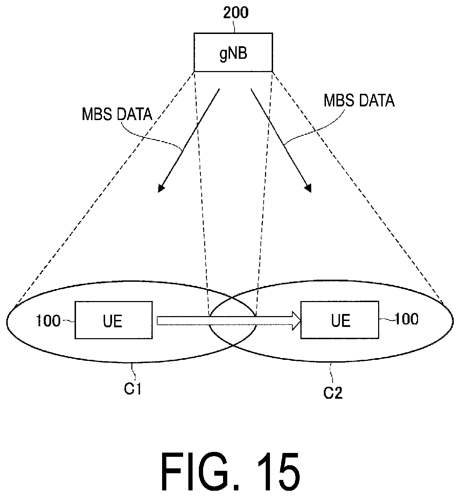

FIG. 15 is a diagram illustrating a handover operation according to the second embodiment. FIG. 15 illustrates an example in which one gNB 200 manages a source cell C1 and a target cell C2.

As illustrated in FIG. 15, the UE 100 in the RRC connected state performs handover from the source cell C1 to the target cell C2, while receiving MBS data from the source cell C1. Here, when the UE 100 fails to receive the MBS data during handover, after the handover, the PDCP entity of the UE 100 transmits, to the target cell C2, a sequence number (specifically, a PDCP sequence number) indicating the MBS data (PDCP packet) having failed to be received.

When the source cell C1 configures a handover command (when the RRC layer requests PDCP reestablishment), the PDCP entity of the UE 100 transmits the sequence number of the lost packet to the target cell C2 after completion of the PDCP reestablishment processing. The UE 100 may further transmit, to target cell C2, the MBS service identifier associated with the sequence number of the lost packet. The PDCP entity of the UE 100 may include, in a Status Report message of the PDCP layer, the sequence number indicating the MBS data (i.e., the lost PDCP packet) having failed to be received, and transmit the Status Report message to the target cell C2.

When receiving the sequence number of the lost packet from the UE 100 via the target cell C2, the gNB 200 transmits (retransmits) the lost packet to the UE 100 via the target cell C2 based on the sequence number. This allows the target cell C2 to compensate for the packet loss occurring at the time of handover during MBS reception by using the retransmission function of the PDCP layer. Thus, the reliability of the MBS reception can be improved.

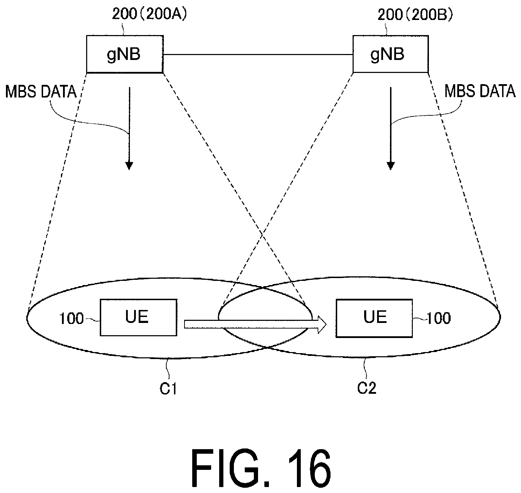

FIG. 16 is a diagram illustrating another example of the handover operation according to the second embodiment. FIG. 16 illustrates an example in which different gNBs 200, gNB 200A and gNB 200B, respectively manage the source cell C1 and the target cell C2.

In the operating environment illustrated in FIG. 16, the source cell C1 and the target cell C2 are assumed to asynchronously provide MBS services. In other words, the target cell C2 does not provide an MBS service (MBS session) provided by the target cell C1.

In such a case, even when the gNB 200B managing the target cell C2 receives the sequence number of the lost packet from the UE 100, the gNB 200 does not hold the lost packet. Thus, the gNB 200B notifies the lost sequence number (and the MBS service identifier) to the gNB 200A managing the source cell C1. The gNB 200A forwards the lost packet (PDCP packet) to the gNB 200B based on the notification from the gNB 200B (data forwarding). The gNB 200B transmits, to the UE 100, the PDCP packet sent from the gNB 200A.

### Other Embodiments

The embodiments described above can not only be separately and independently implemented, but can also be implemented in combination of two or more of the embodiments.

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing the processes to be performed by the UE 100 or the gNB 200 may be integrated, and at least part of the UE 100 or the gNB 200 may be configured as a semiconductor integrated circuit (a chipset or an SoC).

Embodiments have been described above in detail with reference to the drawings, but specific configurations are not limited to those described above, and various design variations can be made without departing from the scope of the present disclosure.

The present application claims priority to Japanese Patent Application No. 2020-132044 (filed on August 3, 2020), the contents of which is referenced herein.

## Claims

1. A communication control method used in a mobile communication system for providing a multicast broadcast service (MBS) from a base station (200) to a user equipment (100), the communication control method comprising:
receiving, by the user equipment (100) from the base station (200), a message used to perform configuration related to a Radio Link Control (RLC) entity of the user equipment (100), wherein
the message comprises an information element designating an operation mode for the RLC entity for an MBS traffic channel transmitting MBS data;
configuring, by the user equipment (100), the RLC entity based on the message;
receiving, by the user equipment (100), MBS data from the base station (200); and
configuring, by the RLC entity of the user equipment (100), an initial value of a variable used for a predetermined RLC operation to be a sequence number of the MBS data received first from the base station (200), wherein
the predetermined RLC operation is for controlling a window used for reception, and
the variable provides an edge of the window.

2. The communication control method according to claim 1, wherein
the information element designates, as an operation mode of the RLC entity, a first mode in which automatic retransmission control is performed and/or a second mode in which the automatic retransmission control is not performed.

3. The communication control method according to claim 1 or 2, wherein
the message further comprises an identifier identifying the MBS traffic channel, and
the information element is associated with the identifier.

4. The communication control method according to claim 2, further comprising:
configuring an operation mode of the RLC entity in accordance with the information element when the user equipment (100) is in a Radio Resource Control (RRC) connected state, and
configuring the second mode regardless of the information element when the user equipment (100) is in an RRC idle state or an RRC inactive state.

5. An apparatus controlling a user equipment (100) in a mobile communication system for providing a multicast broadcast service (MBS) from a base station (200) to a user equipment (100), the apparatus comprising a processor and a memory coupled to the processor, the processor configured to
receive from a base station (200), a message used to perform configuration related to a Radio Link Control (RLC) entity of the user equipment (100), wherein
the message comprises an information element designating an operation mode for the RLC entity for an MBS traffic channel transmitting MBS data;
configure the RLC entity based on the message;
receive MBS data from the base station (200); and
configure, in the RLC entity of the user equipment (100), an initial value of a variable used for a predetermined RLC operation to be a sequence number of the MBS data received first from the base station (200), wherein
the predetermined RLC operation is for controlling a window used for reception, and
the variable provides an edge of the window.

6. A user equipment (100) comprising the apparatus according to claim 5.

7. A computer program comprising instructions that, when the program is executed by a user equipment (100), cause the user equipment (100) to carry out the method of claim 1.

8. A mobile communication system comprising:
a user equipment (100); and
a base station (200) configured to provide a multicast broadcast service (MBS) to the user equipment (100), wherein
the user equipment (100) is configured to:
receive, from the base station (200), a message used to perform configuration related to a Radio Link Control (RLC) entity of the user equipment (100), wherein
the message comprises an information element designating an operation mode for the RLC entity for an MBS traffic channel transmitting MBS data;
configure the RLC entity based on the message;
receive MBS data from the base station (200); and
configure, in the RLC entity of the user equipment (100), an initial value of a variable used for a predetermined RLC operation to be a sequence number of the MBS data received first from the base station (200), wherein
the predetermined RLC operation is for controlling a window used for reception, and
the variable provides an edge of the window.

## Patentansprüche

1. Kommunikationssteuerverfahren, das in einem Mobilkommunikationssystem verwendet wird, um einen Multicast-Broadcast-Dienst (MBS) von einer Basisstation (200) an eine Benutzereinrichtung (100) bereitzustellen, wobei das Kommunikationssteuerverfahren aufweist:
Empfangen einer Nachricht, die zur Durchführung einer Konfiguration in Bezug auf eine Funkverbindungssteuer-(RLC) -einheit der Benutzereinrichtung (100) verwendet wird, durch die Benutzereinrichtung (100) von der Basisstation (200), wobei
die Nachricht ein Informationselement aufweist, das einen Betriebsmodus für die RLC-Einheit für einen MBS-Verkehrskanal, der MBS-Daten überträgt, festlegt,
Konfigurieren der RLC-Einheit durch die Benutzereinrichtung (100) basierend auf der Nachricht,
Empfangen von MBS-Daten von der Basisstation (200) durch die Benutzereinrichtung (100), und
Konfigurieren eines Anfangswerts einer Variablen, die für einen vorbestimmten RLC-Betrieb verwendet wird, als eine Sequenznummer der MBS-Daten, die zuerst von der Basisstation (200) empfangen werden, durch die RLC-Einheit der Benutzereinrichtung (100), wobei
der vorbestimmte RLC-Betrieb zum Steuern eines für den Empfang verwendeten Fensters dient und
die Variable einen Rand des Fensters bereitstellt.

2. Kommunikationssteuerverfahren gemäß Anspruch 1, wobei
das Informationselement als Betriebsmodus der RLC-Einheit einen ersten Modus, in dem eine automatische Sendewiederholungssteuerung durchgeführt wird, und/oder einen zweiten Modus, in dem die automatische Sendewiederholungssteuerung nicht durchgeführt wird, festlegt.

3. Kommunikationssteuerverfahren gemäß Anspruch 1 oder 2, wobei
die Nachricht ferner einen Identifikator aufweist, der den MBS-Verkehrskanal identifiziert, und
das Informationselement dem Identifikator zugeordnet ist.

4. Kommunikationssteuerverfahren gemäß Anspruch 2, ferner aufweisend:
Konfigurieren eines Betriebsmodus der RLC-Einheit gemäß dem Informationselement, wenn sich die Benutzereinrichtung (100) in einem Funkressourcensteuer-(RRC-) Verbindungszustand befindet, und
Konfigurieren des zweiten Modus unabhängig von dem Informationselement, wenn sich die Benutzereinrichtung (100) in einem RRC-Leerlaufzustand oder einem RRC-Inaktivzustand befindet.

5. Vorrichtung zum Steuern einer Benutzereinrichtung (100) in einem Mobilkommunikationssystem zum Bereitstellen eines Multicast-Broadcast-Dienstes (MBS) von einer Basisstation (200) an eine Benutzereinrichtung (100), wobei die Vorrichtung einen Prozessor und einen mit dem Prozessor gekoppelten Speicher aufweist, wobei der Prozessor konfiguriert ist zum:
Empfangen, von einer Basisstation (200), einer Nachricht, die verwendet wird, um eine Konfiguration in Bezug auf eine Funkverbindungssteuer- (RLC) -einheit der Benutzereinrichtung (100) durchzuführen, wobei
die Nachricht ein Informationselement aufweist, das einen Betriebsmodus für die RLC-Einheit für einen MBS-Verkehrskanal, der MBS-Daten überträgt, festlegt,
Konfigurieren der RLC-Einheit basierend auf der Nachricht,
Empfangen von MBS-Daten von der Basisstation (200), und
Konfigurieren, in der RLC-Einheit der Benutzereinrichtung (100), eines Anfangswerts einer Variablen, die für einen vorbestimmten RLC-Betrieb verwendet wird, als eine Sequenznummer der MBS-Daten, die zuerst von der Basisstation (200) empfangen wurden, wobei
der vorbestimmte RLC-Betrieb zum Steuern eines für den Empfang verwendeten Fensters dient, und
die Variable einen Rand des Fensters bereitstellt.

6. Benutzereinrichtung (100), die die Vorrichtung gemäß Anspruch 5 aufweist.

7. Computerprogramm, aufweisend Befehle, die, wenn das Programm von einer Benutzereinrichtung (100) ausgeführt wird, bewirken, dass die Benutzereinrichtung (100) das Verfahren gemäß Anspruch 1 ausführt.

8. Mobilkommunikationssystem, aufweisend:
eine Benutzereinrichtung (100) und
eine Basisstation (200), die konfiguriert ist, um einen Multicast-Broadcast-Dienst (MBS) an die Benutzereinrichtung (100) bereitzustellen, wobei
die Benutzereinrichtung (100) konfiguriert ist zum:
Empfangen einer Nachricht von der Basisstation (200), die verwendet wird, um eine Konfiguration in Bezug auf eine Funkverbindungssteuer- (RLC) -einheit der Benutzereinrichtung (100) durchzuführen, wobei
die Nachricht ein Informationselement aufweist, das einen Betriebsmodus für die RLC-Einheit für einen MBS-Verkehrskanal, der MBS-Daten überträgt, festlegt,
Konfigurieren der RLC-Einheit basierend auf der Nachricht,
Empfangen von MBS-Daten von der Basisstation (200), und
Konfigurieren, in der RLC-Einheit der Benutzereinrichtung (100), eines Anfangswerts einer Variablen, die für einen vorbestimmten RLC-Betrieb verwendet wird, als eine Sequenznummer der MBS-Daten, die zuerst von der Basisstation (200) empfangen werden, wobei
der vorbestimmte RLC-Betrieb zum Steuern eines für den Empfang verwendeten Fensters dient und
die Variable einen Rand des Fensters bereitstellt.

## Revendications

1. Procédé de commande de communication utilisé dans un système de communication mobile pour fournir un service de diffusion multicast (MBS) à partir d'une station de base (200) vers un équipement utilisateur (100), le procédé de commande de communication comprenant :
la réception, par l'équipement utilisateur (100) à partir de la station de base (200), d'un message utilisé pour effectuer une configuration liée à une entité de commande de liaison radio (RLC) de l'équipement utilisateur (100), dans lequel
le message comprend un élément d'information désignant un mode de fonctionnement pour l'entité RLC pour un canal de trafic MBS transmettant des données MBS ;
la configuration, par l'équipement utilisateur (100), de l'entité RLC sur la base du message ;
la réception, par l'équipement utilisateur (100), de données MBS provenant de la station de base (200) ; et
la configuration, par l'entité RLC de l'équipement utilisateur (100), d'une valeur initiale d'une variable utilisée pour un fonctionnement RLC prédéterminé pour être un numéro de séquence des données MBS reçues en premier de la station de base (200), dans lequel
le fonctionnement RLC prédéterminé sert à commander une fenêtre utilisée pour la réception, et
la variable fournit un bord de la fenêtre.

2. Procédé de commande de communication selon la revendication 1, dans lequel
l'élément d'information désigne, en tant que mode de fonctionnement de l'entité RLC, un premier mode dans lequel une commande de retransmission automatique est effectuée et/ou un deuxième mode dans lequel la commande de retransmission automatique n'est pas effectuée.

3. Procédé de commande de communication selon la revendication 1 ou 2, dans lequel
le message comprend en outre un identifiant qui identifie le canal de trafic MBS, et
l'élément d'information est associé à l'identifiant.

4. Procédé de commande de communication selon la revendication 2, comprenant en outre :
la configuration d'un mode de fonctionnement de l'entité RLC conformément à l'élément d'information lorsque l'équipement utilisateur (100) est dans un état connecté de commande de ressource radio (RRC), et
la configuration du deuxième mode indépendamment de l'élément d'information lorsque l'équipement utilisateur (100) est dans un état de repos RRC ou un état inactif RRC.

5. Appareil commandant un équipement utilisateur (100) dans un système de communication mobile pour fournir un service de diffusion multicast (MBS) à partir d'une station de base (200) vers un équipement utilisateur (100), l'appareil comprenant un processeur et une mémoire couplée au processeur, le processeur étant configuré pour
recevoir d'une station de base (200) un message utilisé pour effectuer une configuration liée à une entité de commande de liaison radio (RLC) de l'équipement utilisateur (100), dans lequel
le message comprend un élément d'information désignant un mode de fonctionnement pour l'entité RLC pour un canal de trafic MBS transmettant des données MBS ;
configurer l'entité RLC sur la base du message ;
recevoir des données MBS provenant de la station de base (200) ; et
configurer, dans l'entité RLC de l'équipement utilisateur (100), une valeur initiale d'une variable utilisée pour un fonctionnement RLC prédéterminé pour être un numéro de séquence des données MBS reçues en premier de la station de base (200), dans lequel
le fonctionnement RLC prédéterminé sert à commander une fenêtre utilisée pour la réception, et
la variable fournit un bord de la fenêtre.

6. Équipement utilisateur (100) comprenant l'appareil selon la revendication 5.

7. Programme informatique comprenant des instructions qui, lorsque le programme est exécuté par un équipement utilisateur (100), amènent l'équipement utilisateur (100) à exécuter le procédé selon la revendication 1.

8. Système de communication mobile, comprenant :
un équipement utilisateur (100) ; et
une station de base (200) configurée pour fournir un service de diffusion multicast (MBS) à l'équipement utilisateur (100), dans lequel
l'équipement utilisateur (100) est configuré pour :
recevoir, de la station de base (200), un message utilisé pour effectuer une configuration liée à une entité de commande de liaison radio (RLC) de l'équipement utilisateur (100), dans lequel
le message comprend un élément d'information désignant un mode de fonctionnement pour l'entité RLC pour un canal de trafic MBS transmettant des données MBS ;
configurer l'entité RLC sur la base du message ;
recevoir des données MBS provenant de la station de base (200) ; et
configurer, dans l'entité RLC de l'équipement utilisateur (100), une valeur initiale d'une variable utilisée pour un fonctionnement RLC prédéterminé pour être un numéro de séquence des données MBS reçues en premier de la station de base (200), dans lequel
le fonctionnement RLC prédéterminé sert à commander une fenêtre utilisée pour la réception, et
la variable fournit un bord de la fenêtre.
